# FASCICULE DE BREVET EUROPEEN

(11) **EP 2 399 458 B1**
(45) Date de publication et mention de la délivrance du brevet: **27.02.2019**
(21) Numéro de dépôt: 11171186.7
(22) Date de dépôt: 23.06.2011
(51) Int. Cl.: A01N 25/34, A01N 25/10, A01N 39/02, A01N 53/00, F16L 57/00, A01P 7/04

(54) **BARRIÈRE DE PROTECTION SOUPLE**
FLEXIBLE SCHUTZBARRIERE
FLEXIBLE PROTECTIVE BARRIER

(30) Priorité: 23.06.2010 FR 1054995
(43) Date de publication de la demande: 28.12.2011
(73) Titulaire: Berkem Developpement, 75007 Paris (FR)
(72) Inventeur: Fahy, Olivier, 24100 Lembras (FR); Messaoudi, Daouïa, 69800 Saint-Priest (FR)
(74) Mandataire: Ipside

(56) Documents cités:
- EP-A1- 0 857 750
- WO-A1-01/08485
- WO-A1-89/01284
- WO-A1-89/02050
- WO-A2-02/35930
- FR-A1- 2 938 277

## Description

La présente invention concerne une barrière de protection souple pour protéger des objets semi-enterrés ou enterrés contre les racines et les insectes vivants ou se déplaçant dans le sol. Elle concerne également une gaine comportant une telle barrière de protection.

Il est connu que les conduits souterrains utilisés tant dans le bâtiment, l'industrie que dans la production, le transport et la distribution d'eau et d'énergie sont victimes de dégradations biologiques qui au fil du temps sont susceptibles d'altérer ou détruire leur fonctionnalité.

S'entendent par conduit souterrains aussi bien les conduites d'alimentation ou d'écoulement d'eau d'un bâtiment ou d'une installation que les tuyaux destinés au passage de câbles électriques, pneumatiques ou optiques, ainsi que les drains destinés à la collecte et l'élimination des eaux souterraines.

On observe que ces conduits enterrés dans le sol, ou les joints dont ils sont pourvus, sont à terme colonisés par les racines des végétaux et divers invertébrés vivants ou se déplaçant dans le sol.

Les exemples de drains obstrués par des racines sont nombreux et nécessitent de lourdes et coûteuses opérations de remplacement.

Par ailleurs, les termites dégradent fréquemment les conduites de circulation ou d'alimentation en eau afin d'y puiser le liquide nécessaire à leur survie.

Or, le traitement dans la masse de ces conduits n'est pas toujours possible pour des raisons physiques ou chimiques.

De même, le traitement par incorporation de substances biocides dans la masse des matériaux constitutifs de conduites de liquide à usage alimentaire est, pour d'évidentes raisons de toxicité, exclu.

Pour remédier au moins partiellement à cette problématique, la demande de brevet européen No. EP 0857750A1 propose des gaines en matière plastique avec addition d'au moins un insecticide, qui est efficace de préférence contre les termites. Néanmoins, cette solution n'offre pas une protection contre les racines des plantes, et l'effet insecticide de la gaine diminue avec le temps.

L'objectif de la présente invention est donc de proposer une protection matérielle s'interposant entre le sol et l'élément à protéger, qui soit simple et économique, facile à mettre en oeuvre et permettant de prévenir ou de minimiser les dommages causés par les racines et les termites ou autres insectes.

A cet effet, l'invention concerne une barrière de protection souple pour un objet semi-enterré ou enterré.

Selon l'invention, cette barrière de protection est en plastique souple et comporte un agent anti-racine et un agent insecticide de manière à former une barrière matérielle contre les racines et les insectes vivants ou se déplaçant dans le sol.

Dans différents modes de réalisation particuliers de cette barrière de protection, chacun ayant ses avantages particuliers et susceptibles de nombreuses combinaisons techniques possibles:
- cette barrière est d'un seul tenant,
On entend par la "barrière est d'un seul tenant" que cette barrière de protection est obtenue d'une seule pièce et ne résulte donc pas de l'assemblage d'éléments initialement distincts.
- la barrière a une structure monocouche ou multicouches,
- cette barrière ayant une structure multicouches, elle comprend une couche externe comportant un agent anti-racine et une couche interne comportant un agent insecticide,
De préférence, la couche externe comporte également au moins un absorbeur d'ultraviolet (UV).
Avantageusement, la couche externe a une perméabilité à la vapeur d'eau inférieure ou égale à 1,5 g/m²/jour.1013,25 hPa, telle que la perméabilité à la vapeur d'eau est mesurée sous une pression de 1013,25 hPa sur une surface de 1 m² pendant 24 heures à 25°C et à une humidité relative de 60%.
A titre purement illustratif, la couche externe est alors à base d'au moins une polyoléfine choisie dans le groupe comprenant le polyéthylène, le polypropylène, le copolymère réticulé d'éthylène et d'acétate de vinyle, le copolymère d'éthylène-alcool vinylique et le polybutène.
- cette couche externe a de plus une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%,
Des exemples de résine à base de polyoléfine ayant à la fois une perméabilité inférieure à la vapeur d'eau mentionnée ci-dessus et une perméabilité inférieure à l'oxygène mentionnée ci-dessus sont le copolymère d'éthylène-alcool vinylique, le polyéthylène, le polypropylène.
De manière plus générale, la couche interne chargée d'insecticide anti-termite est renforcée par pelliculage de sa face active venant au contact du sol à l'aide d'une couche externe de polymère formant une barrière étanche aux conditions de pH du milieu susceptible d'entrainer la dégradation du principe actif insecticide.
- ladite barrière comprend de plus une couche intermédiaire, ladite couche intermédiaire ayant une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%,
Des exemples de résines à base de polyoléfine ayant une perméabilité inférieure à l'oxygène mentionnée ci-dessus sont le polyéthylène, le polypropylène et le copolymère d'éthylène-alcool vinylique.
- cette couche externe a une épaisseur comprise entre 10 et 150 µm, et encore mieux entre 50 et 100 µm, de manière à limiter la surface de dégradation de la couche externe causée par des insectes avant leur contact avec l'agent insecticide de ladite couche interne,
- les couches interne et externe sont obtenues avec des résines à base de polyoléfines distinctes,
- cette barrière ayant une structure monocouche, elle comprend un mélange d'une ou plusieurs polyoléfines et d'au moins un agent anti-racine et un agent insecticide,
De préférence, cette structure monocouche comporte également au moins un absorbeur d'ultraviolet (UV).

A titre purement illustratif, la ou les polyoléfines sont choisies dans le groupe comprenant le polyéthylène (PE), le polypropylène (PP), un copolymère d'éthylène-propylène (EPR), le polybutène (PB), le polyméthylpentène (PMP), l'éthylène-acétate de vinyle (EVA).
- l'agent anti-racine est un dérivé chlorophénoxy,
Par exemple, cet agent anti-racine est l'acide 2-(4-chloro-2-méthylphénoxy) propionique, encore appelé acide MCPP.
- ledit insecticide est choisi dans la famille des pyréthrinoïdes.
A titre illustratif, on pourra choisir cet insecticide dans le groupe comprenant la bifenthrine, l'alpha-cyperméthrine, la cyperméthrine, la perméthrine.

L'invention concerne encore une gaine pour protéger une conduite ou un tuyau. Selon l'invention, cette gaine comporte une barrière de protection telle que décrite précédemment.

Cette gaine est particulièrement adaptée pour venir envelopper des conduites ou tuyaux destinés à être enterrés afin d'assurer leur protection.

Puisque cette gaine est rapportée, elle peut avantageusement être mise en oeuvre pour protéger des conduites transportant des eaux destinées à la consommation sans présenter de nocivité pour le consommateur final.

Avantageusement, lorsque la conduite à protéger fait office de drain, cette gaine est micro-perforée afin de permettre un écoulement des liquides.

Par ailleurs, cette gaine de protection peut être fendue longitudinalement pour s'appliquer sur des conduits déjà raccordés ou de grande longueur, et pour lesquels l'habillage par l'une des extrémités est difficile ou impossible à réaliser.

La présente invention concerne également l'utilisation d'une barrière de protection telle que décrite précédemment pour la protection anti-termite des constructions.

De préférence, cette barrière de protection est étendue sur la totalité de la surface constructible découverte par les travaux de terrassement, y compris les fondations avant construction d'un bâtiment.

Elle peut de plus dépasser hors du sol de manière à s'assurer qu'elle recouvre bien la totalité de la surface constructible mise à nue par le terrassement.

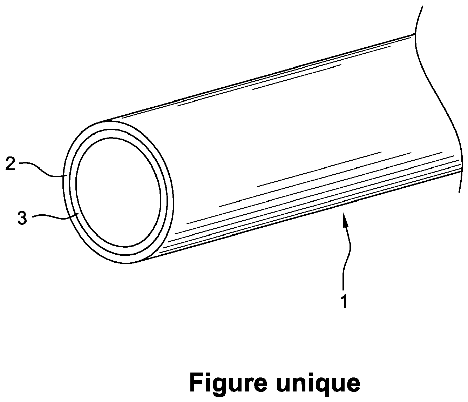

L'invention sera décrite plus en détail en référence à l'unique dessin annexé, lequel représente schématiquement une gaine de protection selon un mode de réalisation préféré de l'invention;

La Figure unique montre une gaine de protection 1 de conduits selon un mode de réalisation préféré de l'invention.

Cette gaine de protection 1 qui est d'un seul tenant, peut être obtenue notamment par extrusion-soufflage multicouche et est destinée à venir protéger les conduits par l'extérieur. Livrée en vrac ou en rouleaux, cette gaine 1 de part sa souplesse s'enfile facilement sur l'élément à protéger.

Cette gaine de protection 1 comporte une couche externe 2 et une couche interne 3. La couche interne 3 est destinée à être placée du côté du conduit à protéger tandis que la couche externe 2 est destinée à être en contact avec le sol.

La couche externe 2 comporte un agent anti-racine et la couche interne 3 comporte un insecticide. La couche externe 2 assure avantageusement la protection de la couche interne 3 dotée de propriété anti-termites.

En effet, au fil du temps, des racines peuvent se développer dans l'environnement immédiat de la gaine de protection 1. Or, durant leur croissance, ces racines pourraient venir percer la couche comportant l'insecticide 3 si celle-ci n'était pas protégée par la couche externe 2 comportant l'agent anti-racine. Cette couche comportant l'insecticide dépourvu ou non d'action systémique, n'est en effet pas phytotoxique. En cheminant dans le réseau racinaire qu'ils ont investi, les termites pourraient alors franchir sans gène une gaine uniquement dotée d'un insecticide, cette gaine ayant été préalablement pénétrée en de multiples points par les racines.

Par ailleurs, la couche externe 2 forme avantageusement un écran empêchant la migration de l'insecticide contenu dans la couche interne 3 vers le milieu extérieur environnant la gaine de protection 1. De même, l'interposition d'une couche externe 2 entre le milieu extérieur environnant la gaine et la couche interne 3 contenant l'actif anti termites évite que les conditions environnementales à la gaine ne dégradent l'actif anti termites, le rendant inefficace. Les propriétés de l'actif anti termites sont ainsi conservées dans le temps.

L'actif anti-racine de la couche externe 2 est, par exemple, l'acide 2-(4-chloro-2-méthylphénoxy) propionique (n° CAS 93-65-2) intégré dans la masse du polymère constituant la couche externe. L'acide 2-(4-chloro-2-méthylphénoxy) propionique (n° CAS 93-65-2) par exemple à des doses variant de 0,10 % 2,00 % (m/m) exerce une forte action anti-racine. Alternativement, cet actif anti-racine peut être un herbicide chlorophénoxylé.

La couche externe 2 peut être obtenue à partir d'une résine choisie dans le groupe comprenant le polyéthylène basse densité, le polyéthylène haute densité, le polypropylène ou l'éthylène-acétate de vinyle.

Cette couche externe 2 comporte également des actifs absorbeurs d'ultraviolet connus de l'homme de l'art, tels que le noir de carbone, les salicylates, benzoates de phényle et benzophénones par exemple.

Cette couche externe 2 peut représenter de 10 à 80 % de l'épaisseur totale de la gaine de protection 1.

Dans leurs explorations du milieu, les insectes cibles viennent au contact de la couche externe 2 qui ne les repousse pas. Tentant de la franchir, ils érodent la couche externe 2 et parviennent sur une infime surface à la couche interne 3 dont la teneur en insecticide n'ayant pas diminuée au contact du milieu extérieur environnant la gaine 1, génère rapidement une mortalité élevée sur les insectes cibles. Les ruptures de la couche externe 2 sous l'action des termites sont d'une surface trop faible pour que le milieu extérieur environnant la gaine 1 ne puisse dégrader l'insecticide.

La couche interne 3 a, par exemple, une épaisseur comprise entre 10 µm et 300 µm. Cette couche interne 3 qui vient au contact du conduit à protéger constitue la barrière anti-termites proprement dite. Elle contient un insecticide de la famille des pyréthrinoïdes intégré à forte dose dans la masse du polymère constitutif de la couche interne.

La bifenthrine (n° CAS 82657-04-3) à des doses variant de 0,05 % à 2,00 % (m/m) dans une couche de polyéthylène basse densité convient sans être exclusif. L'alpha-cypermétrine la perméthrine, la cyperméthrine associées à une résine choisie dans le groupe comprenant le polyéthylène basse densité, le polyéthylène haute densité, le polypropylène et l'éthylène-acétate de vinyle conviennent également.

Aux doses énoncées, l'insecticide exerce une action rapide et létale à l'encontre des termites ce qui interdit tout franchissement de la gaine de protection 1. Cette couche interne 3 peut représenter de 20 à 90 % de l'épaisseur totale de la gaine.

L'épaisseur totale du matériau constitué des deux couches décrites est susceptible de varier de 50 µm à 5 millimètres selon la nature et la disposition du conduit à protéger.

Selon un second mode de réalisation de la présente invention, la gaine de protection comporte une seule couche, les principes actifs dotés de l'action anti-racine et l'insecticide sont incorporés tous deux au matériau plastique constitutif de la gaine protectrice.

Cette couche unique contient dans son épaisseur un actif anti-racine, tel que l'acide 2-(4-chloro-2-méthylphénoxy) propionique (n° CAS 93-65-2) à des doses variant par exemple de 0,10 % 2,00 % (m/m). Cet acide exerce une forte action anti-racine. Alternativement, l'actif anti-racine peut être un herbicide chlorophénoxylé.

La couche unique de la gaine de protection peut être obtenue à partir d'une résine choisie dans le groupe comprenant le polyéthylène basse densité, le polyéthylène haute densité, le polypropylène et l'éthylène-acétate de vinyle.

Cette couche unique contient également des actifs absorbeurs d'ultraviolet connus de l'homme de l'art, tels que le noir de carbone, les salicylates, benzoates de phényle et benzophénones par exemple.

De surcroit, cette couche unique contient un insecticide de la famille des pyréthrinoïdes intégré à forte dose dans la masse du polymère. La bifenthrine (n° CAS 82657-04-3) à des doses variant de 0,05 % à 2,00 % (m/m) dans une couche de polyéthylène basse densité convient sans être exclusif. L'alpha-cypermétrine la perméthrine, la cyperméthrine associées à une résine choisie dans le groupe comprenant le polyéthylène basse densité, le polyéthylène haute densité, le polypropylène et l'éthyle-vinyle-acétate conviennent également.

Aux doses énoncées, l'insecticide exerce une action rapide et létale à l'encontre des termites ce qui interdit tout franchissement de la gaine de protection.

L'épaisseur totale de cette couche unique est susceptible de varier de 50 µm à 5 millimètres selon la nature et la disposition du conduit à protéger.

## Revendications

1. Gaine de protection pour un objet semi-enterré ou enterré, **caractérisée en ce que** :
- ladite gaine est en plastique souple et comporte un agent anti-racine et un agent insecticide de manière à former une barrière matérielle contre les racines et les insectes vivants ou se déplaçant dans le sol,
- ladite gaine ayant une structure multicouches, elle comprend une couche externe (2) comportant un agent anti-racine qui est un dérivé chlorophénoxy, ladite couche externe (2) étant destinée à être en contact avec le sol, et une couche interne (3) comportant un agent insecticide, ladite couche interne (3) étant destinée à être en contact avec l'objet à protéger, la couche externe (2) formant un écran empêchant la migration de l'agent insecticide contenu dans la couche interne (3) vers le milieu extérieur environnant ladite gaine de manière à conserver dans le temps les propriétés de l'agent insecticide ;
**en ce que** la couche externe (2) a une perméabilité à la vapeur d'eau inférieure ou égale à 1,5 g/m²/jour.1013,25 hPa, telle que la perméabilité à la vapeur d'eau est mesurée sous une pression de 1013,25 hPa sur une surface de 1 m² pendant 24 heures à 25°C et à une humidité relative de 60% ;
**en ce que** la couche externe (2) est à base d'au moins une polyoléfine choisie dans le groupe comprenant le polyéthylène, le polypropylène, le copolymère réticulé d'éthylène et d'acétate de vinyle, le copolymère d'éthylène-alcool vinylique et le polybutène ;
**en ce que** ladite couche interne (3) contient un insecticide de la famille des pyréthrinoïdes intégré dans la masse du polymère constitutif de la couche interne (3), ladite couche interne (3) étant renforcée par pelliculage de sa face active venant au contact du sol à l'aide d'une couche externe de polymère formant une barrière étanche aux conditions de pH du milieu susceptible d'entraîner la dégradation du principe actif insecticide, et
**en ce que** l'agent insecticide est un agent anti-termite et les insectes sont des termites.

2. Gaine selon la revendication 1, **caractérisée en ce qu'**elle est d'un seul tenant.

3. Gaine selon la revendication 1 ou 2, **caractérisée en ce que** ladite couche externe (2) comporte de plus au moins un absorbeur d'ultraviolet.

4. Gaine selon l'une des revendications 1 à 3, **caractérisée en ce que** ladite couche externe a de plus une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%.

5. Gaine selon l'une des revendications 1 à 3, **caractérisée en ce que** ladite gaine comprend de plus une couche intermédiaire, ladite couche intermédiaire ayant une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%.

6. Gaine selon l'une quelconque des revendications 1 à 5, **caractérisée en ce que** ladite couche externe a une épaisseur comprise entre 10 et 150 µm de manière à limiter la surface de dégradation de la couche externe causée par des insectes avant leur contact avec l'agent insecticide de ladite couche interne.

7. Utilisation d'une gaine de protection selon l'une quelconque des revendications 1 à 6 pour la protection anti-termite des constructions.

## Patentansprüche

1. Schutzhülle für ein halbvergrabenes oder vergrabenes Objekt, **dadurch gekennzeichnet, dass**:
- die Hülle aus weichem Kunststoff ist und ein wurzelabwehrendes Mittel und ein insektizides Mittel umfasst, um eine materielle Sperre gegen die Wurzeln und die Insekten zu bilden, die im Boden leben oder sich in demselben bewegen,
- die Hülle, indem sie eine mehrschichtige Struktur aufweist, sie eine äußere Schicht (2) umfasst, die ein wurzelabwehrendes Mittel umfasst, welches ein Chlorphenoxyderivat ist, wobei die äußere Schicht (2) dazu bestimmt ist, sich mit dem Boden in Kontakt zu befinden, und eine innere Schicht (3), die ein insektizides Mittel umfasst, wobei die innere Schicht (3) dazu bestimmt ist, sich mit dem zu schützenden Objekt in Kontakt zu befinden, wobei die äußere Schicht (2) einen Schirm bildet, der die Wanderung des insektiziden Mittels, das in der inneren Schicht (3) enthalten ist, zur Außenumgebung verhindert, die die Hülle umgibt, um die Eigenschaften des insektiziden Mittels über die Zeit hinweg aufrecht zu erhalten; dadurch, dass die äußere Schicht (2) eine Wasserdampfdurchlässigkeit von kleiner oder gleich 1,5 g/m²/Tag.1013,25 hPa aufweist, wobei die Wasserdampfdurchlässigkeit unter einem Druck von 1013,25 hPa auf einer Fläche von 1 m² während 24 Stunden bei 25 °C und bei einer relativen Feuchtigkeit von 60 % gemessen wird;
dadurch, dass die äußere Schicht (2) auf Basis von mindestens einem Polyolefin ist, ausgewählt aus der Gruppe, die Polyethylen, Polypropylen, vernetztes Copolymer aus Ethylen und Vinylacetat, Ethylen-Vinylalkohol-Copolymer und Polybuten umfasst;
dadurch, dass die innere Schicht (3) ein Insektizid aus der Familie der Pyrethrinoide enthält, das in der Masse des Polymers integriert ist, aus dem die innere Schicht (3) besteht, wobei die innere Schicht (3) durch Beschichtung seiner aktiven Seite, die mit dem Boden in Kontakt kommt, mithilfe einer äußeren Polymerschicht verstärkt ist, die eine dichte Sperre gegenüber den pH-Bedingungen der Umgebung bildet, welche die Schädigung des insektiziden Wirkstoffs bewirken können, und
dadurch, dass das insektizide Mittel ein termitenabwehrendes Mittel ist und die Insekten Termiten sind.

2. Hülle nach Anspruch 1, **dadurch gekennzeichnet, dass** sie aus einem Stück ist.

3. Hülle nach Anspruch 1 oder 2, **dadurch gekennzeichnet, dass** die äußere Schicht (2) darüber hinaus mindestens ein Ultraviolett-Absorptionsmittel umfasst.

4. Hülle nach einem der Ansprüche 1 bis 3, **dadurch gekennzeichnet, dass** die äußere Schicht darüber hinaus eine Sauerstoffdurchlässigkeit von kleiner als 5000 cm³/m²/Tag.1013,25 hPa aufweist, wobei die Sauerstoffdurchlässigkeit unter einem Druck von 1013,25 hPa auf einer Fläche von 1 m² während 24 Stunden bei 25 °C und bei einer relativen Feuchtigkeit von 60 % gemessen wird.

5. Hülle nach einem der Ansprüche 1 bis 3, **dadurch gekennzeichnet, dass** die Hülle darüber hinaus eine Zwischenschicht umfasst, wobei die Zwischenschicht eine Sauerstoffdurchlässigkeit von kleiner als 5000 cm³/m²/Tag.1013,25 hPa aufweist, wobei die Sauerstoffdurchlässigkeit unter einem Druck von 1013,25 hPa auf einer Fläche von 1 m² während 24 Stunden bei 25 °C und bei einer relativen Feuchtigkeit von 60 % gemessen wird.

6. Hülle nach einem der Ansprüche 1 bis 5, **dadurch gekennzeichnet, dass** die äußere Hülle eine Dicke im Bereich zwischen 10 und 150 µm aufweist, um die Schädigungsfläche der äußeren Schicht, die von Insekten vor deren Kontakt mit dem insektiziden Mittel der inneren Schicht verursacht wird, zu begrenzen.

7. Verwendung einer Schutzhülle nach einem der Ansprüche 1 bis 6 zum termitenabwehrenden Schutz von Bauwerken.

## Claims

1. Protective tube for a semi-buried or buried object, **characterised in that**:
- said tube is made from flexible plastic and comprises a root-resistant agent and an insecticidal agent so as to form a physical barrier against roots and living insects moving around in the soil,
- said tube having a multi-layered structure, comprising an external layer (2) including a root-resistant agent which is a chlorophenoxy derivative, said external layer (2) being designed to be in contact with the soil, and an internal layer (3) comprising an insecticide agent, said internal layer (3) being designed to be in contact with the object to be protected, the external layer (2) forming a screen preventing the migration of insecticidal agent contained in the internal layer (3) to the external environment which surrounds said tube so as maintain the properties of the insecticidal agent over time;
**in that** the external layer (2) has a permeability to water vapour which is less than or equal to 1.5 g/m²/day.1013.25 hPa, such that the permeability to water vapour is measured at a pressure of 1013.25 hPa over an area of 1 m² for 24 hours at 25 °C and a relative humidity of 60%;
**in that** the external layer (2) is based on at least one polyolefin selected from a group comprising polyethylene, polypropylene, cross-linked ethylene and vinyl acetate copolymer, ethylene-vinyl alcohol copolymer and polybutene; and **in that** said internal layer (3) contains an insecticide from the pyrethroid family integrated into the mass of the constituent polymer of the internal layer (3), said internal layer (3) being reinforced by the lamination of its active face which comes into contact with the soil by means of an external polymer layer forming a resistive barrier to the pH conditions of the environment which are likely to cause the degradation of the active insecticide principle and
**in that** the insecticidal agent is an anti-termite agent and the insects are termites.

2. Tube according to claim 1, **characterised in that** it is made in one piece.

3. Tube according to claim 1 or 2, **characterised in that** said external layer (2) also comprises at least one ultraviolet absorber.

4. Tube according to any of claims 1 to 3, **characterised in that** said external layer also has a permeability to oxygen of less than 5,000 cm³ /m² /day.1013.25 hPa, such that the permeability to oxygen is measured under a pressure of 1013.25 hPa over an area of 1 m² for 24 hours at 25 °C and at a relative humidity of 60%.

5. Tube according to any of claims 1 to 3, **characterised in that** said tube also comprises an intermediate layer, said intermediate layer having a permeability to oxygen of less than 5,000 cm³ /m² /day.1013.25 hPa, such that the permeability to oxygen is measured under a pressure of 1013.25 hPa over an area of 1 m² for 24 hours at 25 °C and at a relative humidity of 60%.

6. Tube according to any of claims 1 to 5, **characterised in that** said external layer has a thickness of between 10 and 150 µm so as to limit the degradation of an area of the external layer caused by insects before they come into contact with the insecticidal agent of said internal layer.

7. Use of a protective tube according to any of claims 1 to 6 for protecting constructions from termites.
